# EUROPEAN PATENT APPLICATION

(11) **EP 4 113 803 A1**
(43) Date of publication of application: **04.01.2023**
(21) Application number: 20922338.7
(22) Date of filing: 28.02.2020
(51) Int. Cl.: H02K 5/173, H02K 5/16

(54) **ELECTRIC MOTOR, FAN, AND AIR CONDITIONER**

(71) Applicant: MITSUBISHI ELECTRIC CORPORATION, Chiyoda-ku Tokyo 100-8310 (JP)
(72) Inventor: ASO, Hiroki, Tokyo 100-8310 (JP); TAKAHASHI, Ryogo, Tokyo 100-8310 (JP)
(74) Representative: Pfenning, Meinig & Partner mbB
(86) International application number: PCT/JP2020/008310
(87) International publication number: WO 2021/171556

(57) **Abstract**

A motor (100) includes a stator (5), a rotor (1) of a consequent-pole type including a rotary shaft (15), a bearing (21) as a rolling bearing that supports the rotary shaft (15), a bearing holding part (6) that is fixed to the stator (5) and holds an outer ring (21b) of the bearing (21), and a creep prevention part (23). The creep prevention part (23) is arranged between the outer ring (21b) and the bearing holding part (6) and increases friction resistance in a circumferential direction of the outer ring (21b) between the outer ring (21b) and the bearing holding part (6).

## Description

### TECHNICAL FIELD

The present disclosure relates to a motor, a blower and an air conditioner.

### BACKGROUND ART

There has been proposed a motor including a stator and a rotor of a consequent-pole type. See Patent Reference 1, for example. In the rotor of the consequent-pole type, magnet magnetic poles and virtual magnetic poles are formed in a rotor core.

The motor of the Patent Reference 1 further includes a bearing that supports a rotary shaft of the rotor and a bearing holding part that holds the bearing. Incidentally, there are cases where an outer ring of the bearing is fixed to the bearing holding part by means of clearance fitting.

### PRIOR ART REFERENCE

### PATENT REFERENCE

Patent Reference 1: Japanese Patent Application Publication No. 2003-309953 (see paragraph 0033 and Fig. 1, for example)

### SUMMARY OF THE INVENTION

### PROBLEM TO BE SOLVED BY THE INVENTION

However, when a load acts on the outer ring in the state of having been fixed to the bearing holding part by means of clearance fitting, there can occur a creep in which the outer ring rotates while contacting the bearing holding part. When the creep occurs, there arises a trouble such as wearing of contact surfaces of the outer ring and the bearing holding part or an increase in vibration and noise in the bearing.

In a rotor of the consequent-pole type like the rotor in the Patent Reference 1, there can occur a difference between magnetic flux density in a magnet magnetic pole and magnetic flux density in a virtual magnetic pole. In this case, the magnitude of magnetic attraction acting between the rotor and the stator becomes not constant in a circumferential direction, and thus there are cases where the rotor is decentered and exciting force acts on the outer ring. Thus, in a motor including a rotor of the consequent-pole type, a load causing a creep is likely to act on an outer ring of a bearing.

An object of the present disclosure is to prevent an occurrence of the creep at the bearing in a motor including a rotor of the consequent-pole type.

### MEANS FOR SOLVING THE PROBLEM

A motor according to an aspect of the present disclosure includes a stator, a rotor of a consequent-pole type including a rotary shaft, a bearing as a rolling bearing that supports the rotary shaft, a bearing holding part that is fixed to the stator and holds an outer ring of the bearing, and a creep prevention part that is arranged between the outer ring of the bearing and the bearing holding part and increases friction resistance in a circumferential direction of the outer ring between the outer ring of the bearing and the bearing holding part.

### EFFECT OF THE INVENTION

According to the present disclosure, an occurrence of a creep at a bearing can be prevented in a motor including a rotor of the consequent-pole type.

### BRIEF DESCRIPTION OF THE DRAWINGS

Fig. 1 is a configuration diagram showing a partial cross section and a side face of a motor according to a first embodiment.
Fig. 2 is a cross-sectional view of the motor shown in Fig. 1 taken along the line A2 - A2.
Fig. 3 is an enlarged sectional view showing a configuration of a rotor shown in Fig. 2.
Fig. 4 is a cross-sectional view showing a configuration of a metallic bracket of the motor according to the first embodiment.
Fig. 5 is a schematic diagram for explaining a creep of a bearing in the motor.
Fig. 6 is a magnetic flux diagram showing the result of a simulation of the flow of magnetic flux in the motor according to the first embodiment.
Fig. 7 is an enlarged sectional view showing a configuration around a load-side bearing of the motor shown in Fig. 1.
Fig. 8(A) is a plan view showing an O-ring shown in Fig. 7, and Fig. 8(B) is a cross-sectional view showing the O-ring shown in Fig. 8(A).
Fig. 9 is an enlarged sectional view showing a configuration of a load-side bearing and surrounding components in a motor according to a second embodiment.
Fig. 10 is an enlarged sectional view showing a configuration of a load-side bearing and surrounding components in a motor according to a third embodiment.
Fig. 11 is an enlarged sectional view showing a configuration of a load-side bearing and surrounding components in a motor according to a modification of the third embodiment.
Fig. 12(A) is an enlarged sectional view showing a configuration of a load-side bearing and surrounding components in a motor according to a fourth embodiment, and Fig. 12(B) is a partial front view of an outer ring of the load-side bearing shown in Fig. 12(A).
Fig. 13 is an enlarged sectional view showing a configuration of a load-side bearing and surrounding components in a motor according to a fifth embodiment.
Fig. 14 is a configuration diagram showing a partial cross section and a side face of a motor according to a sixth embodiment.
Fig. 15 is a configuration diagram showing a partial cross section and a side face of a motor according to a first modification of the sixth embodiment.
Fig. 16 is an enlarged sectional view showing a configuration of an anti-load-side bearing and surrounding components in the motor shown in Fig. 15.
Fig. 17 is a configuration diagram showing a partial cross section and a side face of a motor according to a second modification of the sixth embodiment.
Fig. 18 is a configuration diagram showing a partial cross section and a side face of a motor according to a third modification of the sixth embodiment.
Fig. 19 is a diagram showing a configuration of an air conditioner employing the motor according to any one of the first to sixth embodiments.
Fig. 20 is a cross-sectional view showing a configuration of an outdoor unit shown in Fig. 19.

### MODE FOR CARRYING OUT THE INVENTION

A rotor, a motor, a blower and an air conditioner according to each embodiment of the present disclosure will be described below with reference to the drawings. The following embodiments are just examples and it is possible to appropriately combine embodiments and appropriately modify each embodiment.

An xyz orthogonal coordinate system is shown in the drawings to facilitate the understanding of the description. A z-axis is a coordinate axis parallel to an axis line of a rotor. An x-axis is a coordinate axis orthogonal to the z-axis. A y-axis is a coordinate axis orthogonal to both the x-axis and the z-axis.

### (First Embodiment)

### <Motor>

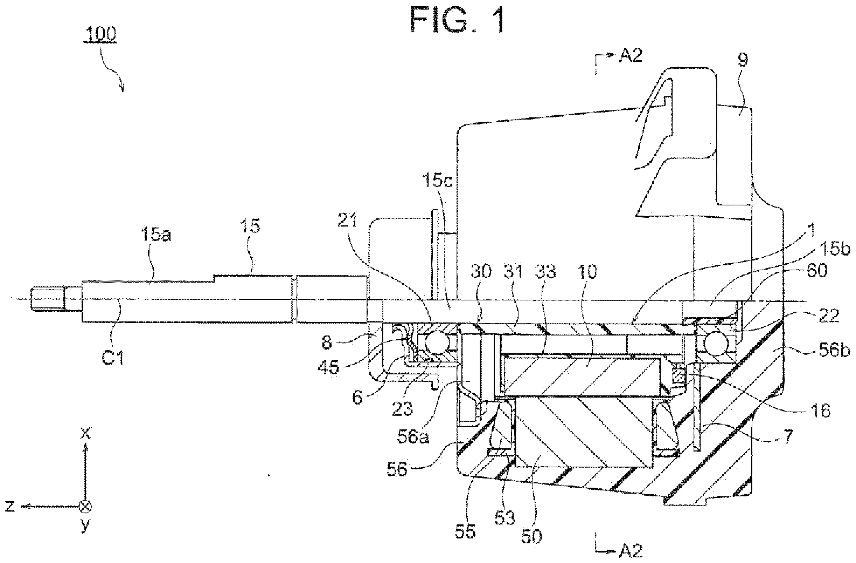

Fig. 1 is a configuration diagram showing a partial cross section and a side face of a motor 100 according to a first embodiment. The motor 100 includes a rotor 1 and a mold stator 9 as a stator. The rotor 1 is arranged inside the mold stator 9. Namely, the motor 100 is a motor of the inner rotor type.

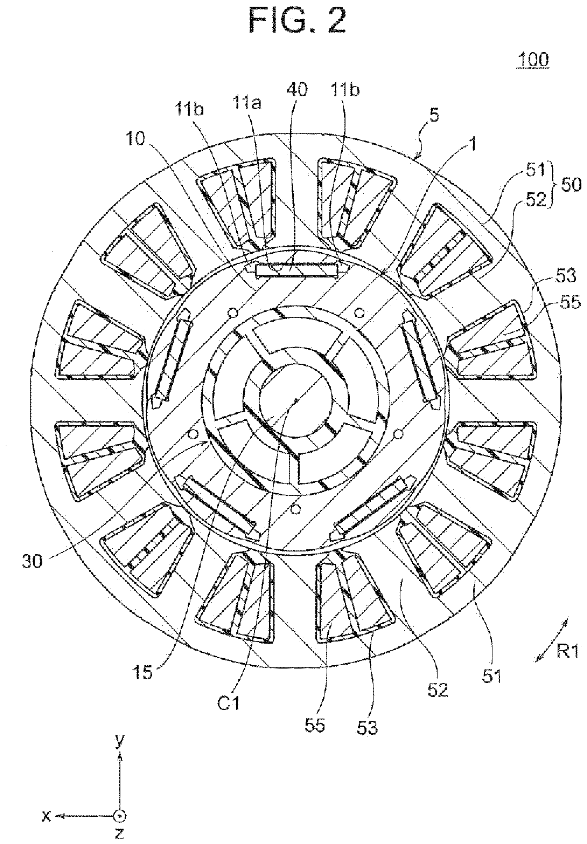

The rotor 1 includes a shaft 15 as a rotary shaft. The rotor 1 is rotatable around an axis line C1 of the shaft 15. The shaft 15 projects from the mold stator 9 towards the +z-axis side. To a tip end part 15a of the shaft 15, a fan of a blower (i.e., a blade wheel 704 of an outdoor blower 150 which will be described later) is attached, for example. Incidentally, in the following description, a direction along a circumference of a circle centering at the axis line C1 of the shaft 15 is referred to as a "circumferential direction" (e.g., the arrow R1 shown in Fig. 2). Further, the z-axis direction is referred to as an "axial direction", and a direction orthogonal to the axial direction is referred to as a "radial direction". Furthermore, the projecting side (i.e., the +z-axis side) of the shaft 15 is referred to as a "load side", and a side of the shaft 15 opposite to the load side is referred to as an "anti-load side".

The motor 100 further includes a bearing 21 that supports the load side of the shaft 15 and a bearing 22 that supports the anti-load side of the shaft 15. The bearing 21 and the bearing 22 are respectively arranged on sides opposite to each other across a stator core 50 of the mold stator 9. The bearing 21 supports a part 15c of the shaft 15 on the load side relative to the mold stator 9. The bearing 22 supports an end part 15b of the shaft 15 on the -z-axis side (i.e., a part on the anti-load side) via an insulation sleeve 60. The bearing 21 and the bearing 22 are rolling bearings, such as ball bearings, for example.

The insulation sleeve 60 is arranged between the end part 15b of the shaft 15 on the -z-axis side and the bearing 22. The insulation sleeve 60 is in a substantially cylindrical shape, for example. The insulation sleeve 60 is formed of thermosetting resin, for example. In the first embodiment, the insulation sleeve 60 is formed of BMC (Bulk Molding Compound) resin.

Since the insulation sleeve 60 is arranged between the end part 15b of the shaft 15 on the -z-axis side and the bearing 22, the shaft 15 and the bearing 22 are insulated from each other. Accordingly, an axial current causing electrolytic corrosion is prevented from flowing from the shaft 15 into the bearing 22. Further, the prevention of the flowing of the axial current into the bearing 22 prevents the axial current from flowing into the bearing 21 via the bearing 22, the mold stator 9 and a metallic bracket 6. Incidentally, it is also possible to arrange the insulation sleeve 60 between the shaft 15 and the bearing 21, or both between the shaft 15 and the bearing 21 and between the shaft 15 and the bearing 22.

As shown in Fig. 1, the motor 100 further includes a cap 8. The cap 8 is fixed to the shaft 15 so as to cover a part of the metallic bracket 6. The cap 8 is a member that prevents entry of foreign matter (e.g., water or the like) into the inside of the motor 100.

### <Mold Stator>

Next, the configuration of the mold stator 9 will be described below by using Figs. 1 and 2. Fig. 2 is a cross-sectional view of the rotor 1 and the mold stator 9 shown in Fig. 1 taken along the line A2 - A2. Incidentally, illustration of a mold resin part 56 of the mold stator 9 is left out in Fig. 2.

As shown in Figs. 1 and 2, the mold stator 9 includes the stator core 50, a coil 55 wound around the stator core 50, and the mold resin part 56 that covers the stator core 50.

The stator core 50 includes a yoke 51 in a ring-like shape centering at the axis line C1 and a plurality of teeth 52 extending inward in the radial directions from the yoke 51. The plurality of teeth 52 are arranged at regular intervals in the circumferential direction R1. A tip end part of each of the plurality of teeth 52 faces the rotor 1 in the radial direction via an air gap. The coil 55 is wound around the teeth 52 via an insulator 53.

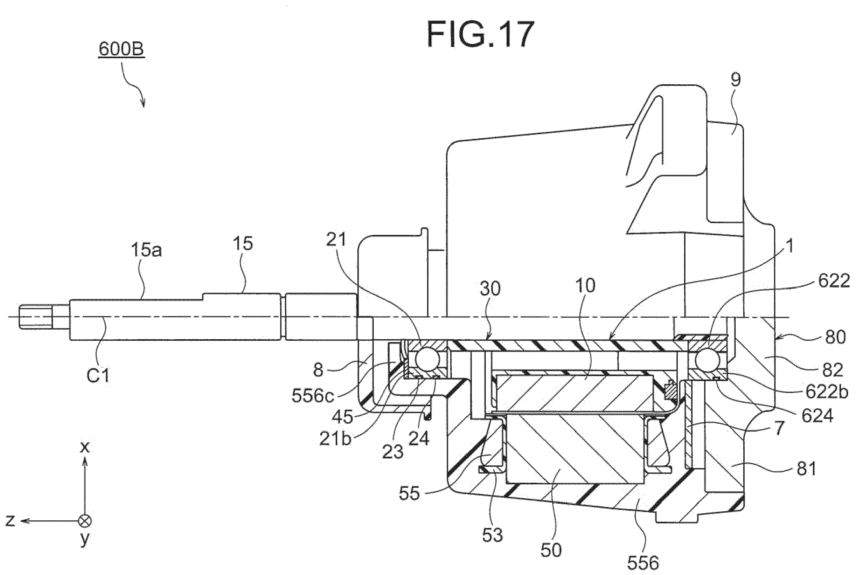

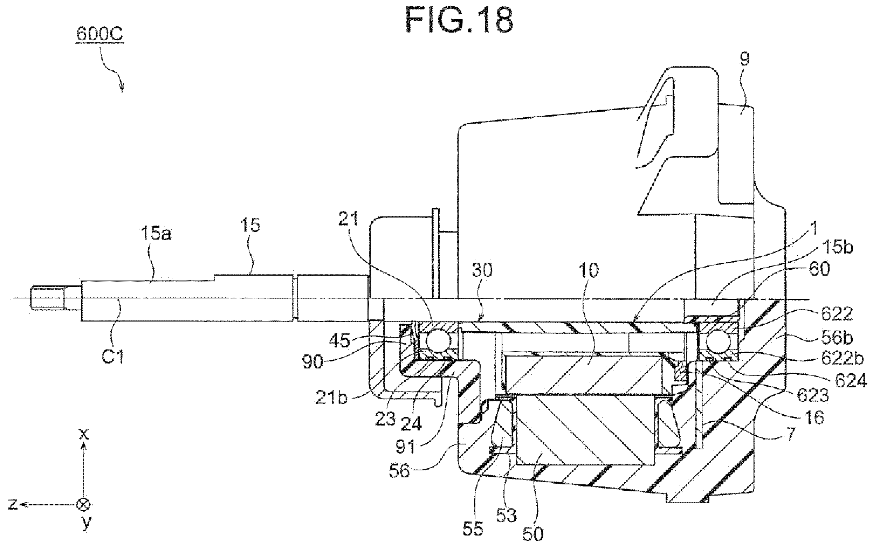

The mold resin part 56 is formed of thermosetting resin such as BMC resin, for example. The mold resin part 56 includes an opening part 56a. The opening part 56a is formed on the +z-axis side of the mold resin part 56. The metallic bracket 6 as a bearing holding part is fixed to the opening part 56a. The load-side bearing 21 is held by the metallic bracket 6. Namely, in the first embodiment, the bearing holding part holding the load-side bearing 21 is formed of metal. The bearing holding part holding the bearing 21 may also be formed of resin as shown in Fig. 17 or 18 which will be explained later.

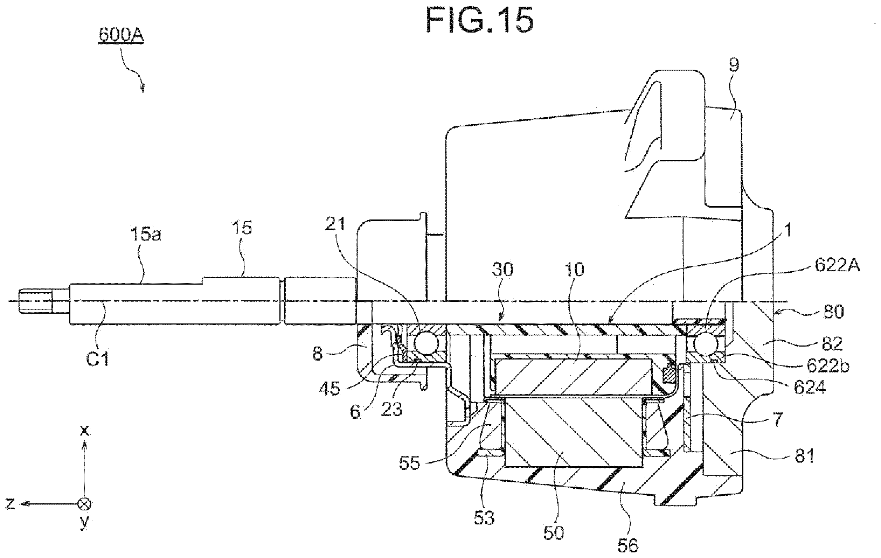

The mold resin part 56 further includes a holding part 56b formed on the -z-axis side. The bearing 22 is held by the holding part 56b. Namely, in the first embodiment, a bearing holding part holding the anti-load-side bearing 22 is formed of resin. Incidentally, the bearing holding part holding the bearing 22 may also be formed of metal as shown in Figs. 15 to 17 which will be explained later.

A circuit board 7 is embedded in the mold resin part 56. To the circuit board 7, wires such as power supply lead wires for supplying electric power to the coil 55 are connected.

### <Rotor>

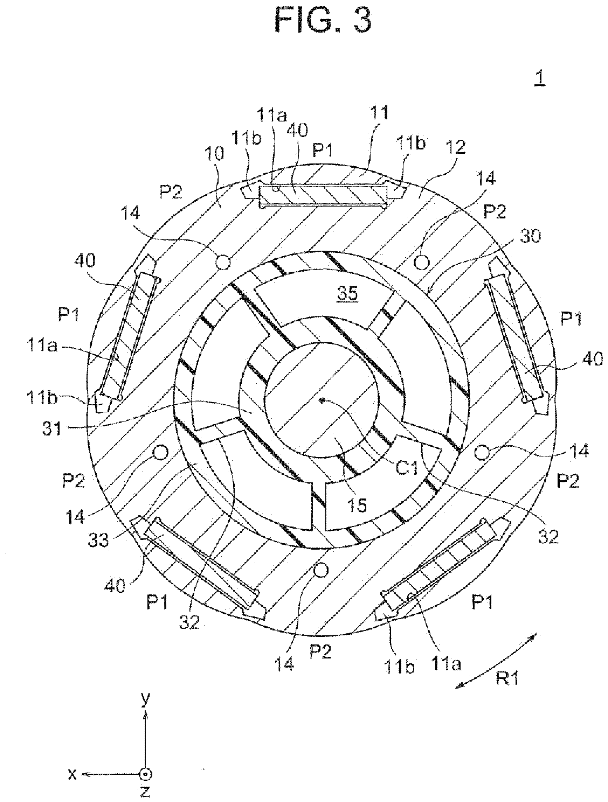

Next, the configuration of the rotor 1 will be described below by using Figs. 2 and 3. Fig. 3 is an enlarged sectional view showing the configuration of the rotor 1 shown in Fig. 2. As shown in Figs. 2 and 3, the rotor 1 includes a rotor core 10 and the shaft 15.

The rotor core 10 is a member in a ring-like shape centering at the axis line C1. The rotor core 10 is formed by fixing a plurality of electromagnetic steel sheets stacked in the axial direction together by means of crimping, for example.

The rotor core 10 is provided with permanent magnets 40. In the first embodiment, the permanent magnets 40 are embedded in the rotor core 10. Namely, the rotor 1 has the IPM (Interior Permanent Magnet) structure. Incidentally, the rotor 1 may also have the SPM (Surface Permanent Magnet) structure in which the permanent magnets 40 are attached to the outer periphery of the rotor core 10.

The rotor core 10 includes first core parts 11 to which permanent magnets 40 are attached and second core parts 12 to which no permanent magnets 40 are attached. In the first embodiment, the rotor core 10 includes a plurality of (e.g., five) first core parts 11 and a plurality of (e.g., five) second core parts 12. The plurality of first core parts 11 and the plurality of second core parts 12 are arranged alternately in the circumferential direction R1.

The first core part 11 includes a magnet insertion hole 11a. The magnet insertion hole 11a is formed on an inner side in the radial direction relative to an outer periphery of the first core part 11. The shape of the magnet insertion hole 11a is a linear shape in a plan view, for example. In the first embodiment, one permanent magnet 40 is inserted in one magnet insertion hole 11a. Incidentally, the shape of the magnet insertion hole 11a may also be a V-shape in a plan view, pointing its convexity inward in the radial direction or pointing its convexity outward in the radial direction. Further, it is also possible to insert two or more permanent magnets 40 in one magnet insertion hole 11a.

The permanent magnet 40 is a rare-earth magnet, for example. In the first embodiment, the permanent magnet 40 is a neodymium rare-earth magnet containing Nd (neodymium), Fe (iron) and B (boron), for example.

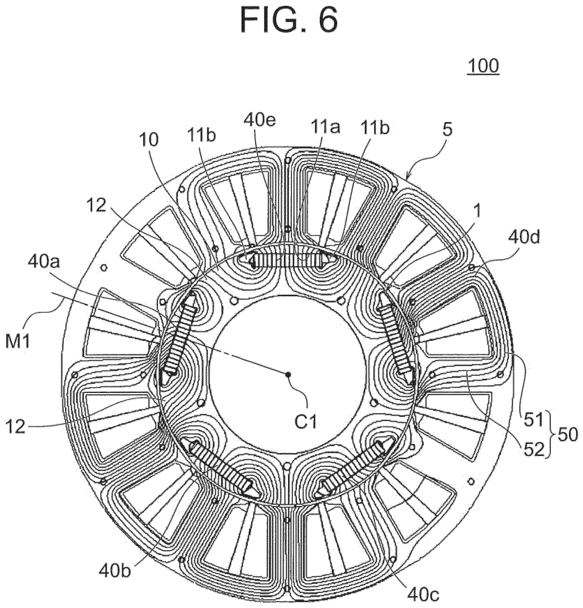

As shown in Fig. 3, the plurality of permanent magnets 40 include magnetic poles having the same polarity as each other (e.g., north poles) on their outer sides in the radial directions. Accordingly, magnet magnetic poles P1 are formed on the outer peripheries of the first core parts 11. Incidentally, in the following description, a straight line extending in the radial direction through the center of the magnet magnetic pole P1 in the circumferential direction R1 (i.e., pole center) is referred to as a "pole center line M1" (see Fig. 6).

The plurality of permanent magnets 40 include magnetic poles having the same polarity as each other (e.g., south poles) on their inner sides in the radial directions. Magnetic flux emitted from the inner side of the permanent magnet 40 in the radial direction flows into the second core part 12, by which a virtual magnetic pole P2 (e.g., south pole) is formed on the outer side of the second core part 12 in the radial direction. Thus, the plurality of second core parts 12 include virtual magnetic poles P2 having the same polarity as each other on their outer sides in the radial directions.

The rotor 1 is a rotor of the consequent-pole type in which the magnet magnetic poles P1 and the virtual magnetic poles P2 are arranged alternately in the circumferential direction R1. In the rotor 1 of the consequent-pole type, the number of permanent magnets 40 can be reduced to half compared to a rotor of a nonconsequent-pole type having the same number of poles. Accordingly, the manufacturing cost of the rotor 1 is reduced. Incidentally, while the pole number of the rotor 1 is 10 in the first embodiment, the pole number is not limited to 10; it is permissible if the pole number is an even number greater than or equal to 2. Further, in the rotor 1, it is permissible even if the magnet magnetic poles P1 are south poles and the virtual magnetic poles P2 are north poles.

The first core part 11 further includes a plurality of flux barriers 11b as leakage flux inhibition holes. The flux barrier 11b is formed on each side of the magnet insertion hole 11a in the circumferential direction R1. Since a part between the flux barrier 11b and the outer periphery of the first core part 11 is formed as a thin wall, leakage flux between the magnet magnetic pole P1 and the virtual magnetic pole P2 adjoining each other is inhibited.

The second core part 12 includes a crimping part 14. The crimping part 14 is a crimping mark formed when the plurality of electromagnetic steel sheets stacked in the axial direction are fixed together by means of crimping. In the first embodiment, the shape of the crimping part 14 as viewed in the axial direction is a circular shape, for example. The shape of the crimping part 14 is not limited to the circular shape but can also be a different shape such as a rectangular shape.

The rotor 1 further includes a connection part 30 that connects the rotor core 10 and the shaft 15 to each other. The connection part 30 is formed of resin material having the electrical insulation property. The connection part 30 is formed of thermoplastic resin such as PBT (PolyButylene Telephthalate), for example. The rotor core 10, the shaft 15 and the insulation sleeve 60 are integrated together via the connection part 30.

The connection part 30 includes an inner cylinder part 31, a plurality of ribs 32, and an outer cylinder part 33. The inner cylinder part 31 is in a ring-like shape and is in contact with an outer peripheral surface 15d of the shaft 15. The outer cylinder part 33 is in contact with an inner peripheral surface 10a of the rotor core 10. The plurality of ribs 32 connect the inner cylinder part 31 and the outer cylinder part 33 to each other. The plurality of ribs 32 radially extend outward in the radial directions from the inner cylinder part 31. The plurality of ribs 32 are arranged centering at the axis line C1 and at equal intervals in the circumferential direction R1. Between ribs 32 adjoining each other in the circumferential direction R1, a hollow part 35 penetrating in the axial direction is formed. Incidentally, the rotor core 10 and the shaft 15 may also be fixed to each other directly via no connection part 30.

As shown in Fig. 1, the rotor 1 further includes a sensor magnet 16. For example, the sensor magnet 16 is attached to a part on the -z-axis side relative to the rotor core 10 and faces the circuit board 7. A magnetic field of the sensor magnet 16 is detected by a magnetic sensor (not shown) provided on the circuit board 7, by which the position of the rotor 1 in the circumferential direction R1 is detected.

### <Metallic Bracket>

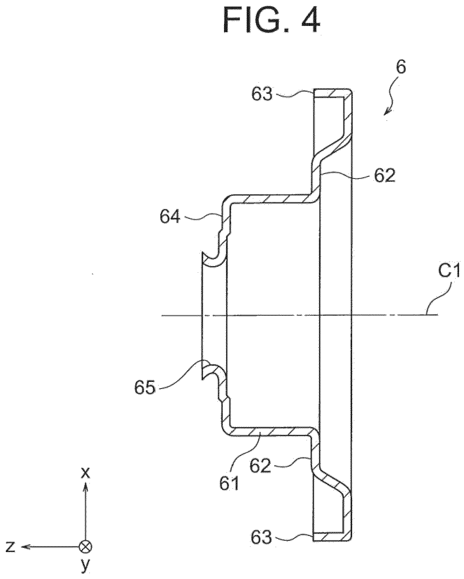

Next, the configuration of the metallic bracket 6 will be described below by using Fig. 4. Fig. 4 is a cross-sectional view showing the configuration of the metallic bracket 6. The metallic bracket 6 is formed of a galvanized steel sheet, for example. The material of the metallic bracket 6 is not limited to a galvanized steel sheet; the metallic bracket 6 may be formed of different metallic material such as aluminum alloy.

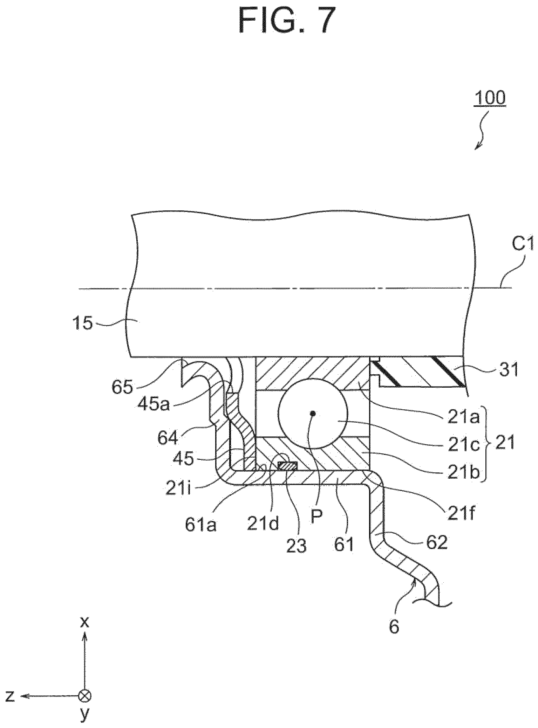

The metallic bracket 6 includes a cylinder part 61, a flange part 62, a fixation part 63 and a base part 64. The cylinder part 61 extends substantially in parallel with the axis line C1. When the metallic bracket 6 is fixed to the shaft 15, the cylinder part 61 faces an outer ring 21b (see Fig. 7) of the bearing 21 in the radial directions. The flange part 62 is formed integrally with the cylinder part 61 and extends outward in the radial directions from an end part of the cylinder part 61 on the anti-load side. The fixation part 63 extends towards the +z-axis side from an end part of the flange part 62 on the outer side in the radial directions. The fixation part 63 is a part of the metallic bracket 6 that is fixed to the mold resin part 56 (see Fig. 1). The fixation part 63 is fixed to the mold resin part 56 by means of press fitting, for example.

The base part 64 is formed integrally with the cylinder part 61 and extends inward in the radial directions from an end part of the cylinder part 61 on the load side. The cylinder part 61, the flange part 62 and the base part 64 are formed by performing a drawing process on the aforementioned galvanized steel sheet, for example. A shaft penetration part 65 which the shaft 15 (see Fig. 1) penetrates is formed in the base part 64. The shaft penetration part 65 projects towards the +z-axis side from an end part of the base part 64 on the inner side in the radial directions.

For example, to facilitate the assembly of the metallic bracket 6 and the bearing 21, the outer ring 21b of the bearing 21 shown in Fig. 1 is fixed to the cylinder part 61 by means of clearance fitting. When a load acts on the outer ring 21b in the state of having been fixed to the cylinder part 61 by means of clearance fitting during the rotation of the motor 100, there can occur a creep in which the outer ring 21b rotates with respect to the cylinder part 61.

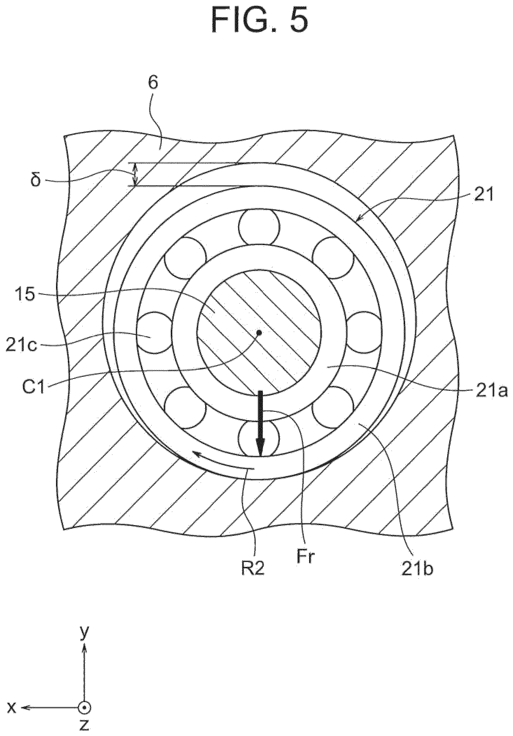

Fig. 5 is a schematic diagram for explaining a creep in the bearing 21. As shown in Fig. 5, the bearing 21 includes an inner ring 21a that supports the shaft 15, the outer ring 21b that is fixed to the cylinder part 61 of the metallic bracket 6 via a clearance δ, and balls 21c as rolling members arranged between the inner ring 21a and the outer ring 21b. While the clearance δ is exaggerated in Fig. 5, the size of the clearance δ is approximately 10 µm. A length of the outer ring 21b in a circumferential direction is shorter than a length of the cylinder part 61 in a circumferential direction.

Thus, when a load Fr acts on the outer ring 21b during the rotation of the motor 100, there occurs a creep in which the outer ring 21b rotates in the direction indicated by the arrow R2 while contacting the cylinder part 61. When the creep occurs, fitting surfaces of the outer ring 21b and the cylinder part 61 wear down and there occurs a trouble such as an occurrence of vibration and noise in the bearing 21 or entry of abrasion powder into the inside of the bearing 21.

The load Fr acting on the outer ring 21b occurs as a contact rotation radial load when the shaft 15 of the rotor 1 is decentered, for example. In the motor 100 including the rotor 1 of the consequent-pole type, decentering is likely to occur to the shaft 15 of the rotor 1 due to a difference between surface magnetic flux density in the magnet magnetic pole P1 and surface magnetic flux density in the virtual magnetic pole P2 as shown in Fig. 6 which will be explained below.

Fig. 6 is a magnetic flux diagram showing the result of a simulation of the flow of magnetic flux in the motor 100. Incidentally, reference characters 40a, 40b, 40c, 40d and 40e are assigned to the permanent magnets in Fig. 6 to facilitate the understanding of the description.

As shown in Fig. 6, the magnetic flux emitted from the inner side of the permanent magnet 40a in the radial direction flows into the second core parts 12 situated on both sides in the circumferential direction R1 with reference to the pole center line M1, by which the virtual magnetic poles P2 (see Fig. 3) are formed. However, in the rotor 1 of the consequent-pole type, there can occur variation in the magnetic flux density between the second core parts 12 situated on both sides in the circumferential direction R1 with reference to the pole center line M1 as shown in Fig. 6. Thus, there are cases where the difference between the surface magnetic flux density in the magnet magnetic pole PI and the surface magnetic flux density in the virtual magnetic pole P2 becomes great in the circumferential direction R1 of the rotor 1.

In such cases, the magnitude of magnetic attraction acting between the stator core 50 and the rotor 1 becomes imbalanced in the circumferential direction R1. Accordingly, the axis line C1 of the shaft 15 is decentered and exciting force a radial direction acts on the rotor 1. Thus, in the motor 100 according to the first embodiment, on the bearing 21 or the bearing 22 supporting the shaft 15 of the rotor 1, the exciting force in the radial direction acts as the load Fr shown in Fig. 5.

Further, when a fan of a blower is attached to the tip end part 15a (see Fig. 1) of the shaft 15, the fan's own weight also acts on the bearing 21 as the load Fr shown in Fig. 5. Accordingly, the load Fr is greater in the bearing 21 than in the bearing 22 and thus creep is more likely to occur in the bearing 21. Therefore, in the first embodiment, a description will be given of a creep prevention part (in the first embodiment, a ring-shaped elastic body 23 shown in Fig. 1 or 7) that prevents creep from occurring in the bearing 21.

Fig. 7 is an enlarged sectional view showing a configuration around the bearing 21 of the motor 100 shown in Fig. 1. As shown in Fig. 7, the motor 100 includes the ring-shaped elastic body 23 as an elastic member as the creep prevention part. The ring-shaped elastic body 23 is arranged between an outer circumferential surface 21f of the outer ring 21b and an inner circumferential surface 61a of the cylinder part 61, and is compressed in the radial directions.

A friction coefficient between the ring-shaped elastic body 23 and the cylinder part 61 is greater than a friction coefficient between the outer ring 21b and the cylinder part 61. Namely, by providing the ring-shaped elastic body 23 between the outer ring 21b and the cylinder part 61, friction resistance (i.e., frictional force) in the circumferential direction R1 between the outer circumferential surface 21f of the outer ring 21b and the inner circumferential surface 61a of the cylinder part 61 increases. Accordingly, the outer ring 21b becomes unlikely to rotate with respect to the cylinder part 61, and thus an occurrence of a creep at the bearing 21 can be inhibited.

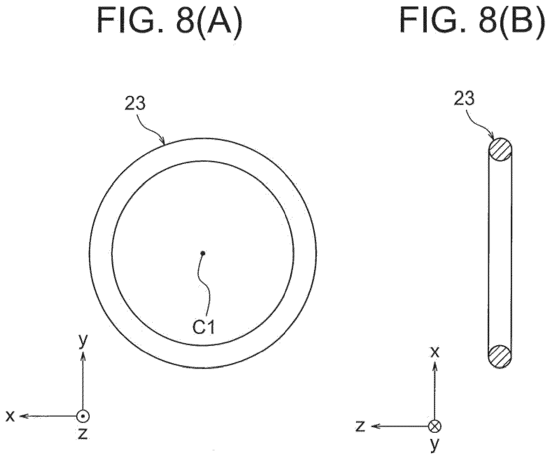

Fig. 8(A) is a plan view showing the ring-shaped elastic body 23 shown in Fig. 7, and Fig. 8(B) is a cross-sectional view showing the ring-shaped elastic body 23 shown in Fig. 8(A). As shown in Figs. 8(A) and 8(B), the ring-shaped elastic body 23 is an elastic member in a ring-like shape centering at the axis line C1. A cross-sectional shape of the ring-shaped elastic body 23 is a circular shape, for example. In the first embodiment, the ring-shaped elastic body 23 is an O-ring. The cross-sectional shape of the ring-shaped elastic body 23 is not limited to the circular shape but can also be a different shape such as a quadrangular shape.

In the case where the ring-shaped elastic body 23 is an O-ring, the friction coefficient between the O-ring and the opposing surface is a value within a range of 1.03 to 1.25, for example. Here, the friction coefficient between iron forming the outer ring 21b and the metallic bracket 6 and the opposing surface is approximately 0.2. Thus, the friction coefficient between the O-ring and the opposing surface is greater than the friction coefficient between the iron and the opposing surface.

The ring-shaped elastic body 23 is, for example, rubber containing thermosetting elastomer. The rubber containing thermosetting elastomer is fluororubber, silicone rubber, ethylene propylene rubber, nitrile rubber or the like, for example.

As shown in Fig. 7, the ring-shaped elastic body 23 is arranged in a groove part 21d formed on the outer circumferential surface 21f of the outer ring 21b. The groove part 21d is a long groove extending in the circumferential direction R1 on the outer circumferential surface 21f. It is also possible to form the groove part 21d on the inner circumferential surface 61a of the cylinder part 61.

Here, regarding the outer ring 21b, its axial direction central part overlaps with the center of the ball 21c in regard to the axial direction position and so needs to have a sufficient wall thickness to withstand the load from the ball 21c. Therefore, in the first embodiment, the groove part 21d is formed at a position on the outer circumferential surface 21f that is deviated towards one side in the axial direction (the +z-axis side in Fig. 7) with reference to the axial direction central position P of the ball 21c. This makes it possible to arrange the ring-shaped elastic body 23 in the outer ring 21b while the axial direction central part has a sufficient wall thickness in the outer ring 21b. It is also possible to form the groove part 21d at a position on the outer circumferential surface 21f that is deviated towards the -z-axis side with reference to the axial direction central position P of the ball 21c.

Further, the ring-shaped elastic body 23 is arranged between the outer ring 21b and the cylinder part 61 and on the base part 64's side with reference to the axial direction central position P of the ball 21c. As mentioned earlier, the cylinder part 61, the flange part 62 and the base part 64 are formed by performing the drawing process on a galvanized steel sheet, for example. As the die (i.e., punch) advances in the drawing process, in the inner circumferential surface 61a of the cylinder part 61, the flange part 62's side is more likely to expand in diameter outward in the radial direction than the base part 64's side. Namely, on the inner circumferential surface 61a of the cylinder part 61, higher dimensional accuracy is likely to be obtained as the position becomes closer to the base part 64. Thus, compressive force acting on the ring-shaped elastic body 23 is stabilized by arranging the ring-shaped elastic body 23 between the outer ring 21b and the cylinder part 61 and on the base part 64's side with reference to the axial direction central position P of the ball 21c. Accordingly, frictional force preventing the rotation of the outer ring 21b with respect to the cylinder part 61 is stabilized, by which an occurrence of a creep at the bearing 21 can be prevented further.

The motor 100 further includes a precompression spring 45 arranged between the base part 64 of the metallic bracket 6 and the bearing 21. The precompression spring 45 applies force to an end face 21i of the outer ring 21b in regard to the axial direction so as to press the end face 21i towards the mold stator 9 shown in Fig. 1. Accordingly, an internal clearance in the bearing 21 becomes a negative clearance, by which rigidity of the bearing 21 is increased. The precompression spring 45 has a through hole 45a which the shaft 15 penetrates. The precompression spring 45 is a wave washer, for example.

### <Effect of First Embodiment>

With the motor 100 according to the first embodiment described above, the following effects are obtained:

With the motor 100 according to the first embodiment, the ring-shaped elastic body 23 increasing the friction resistance in the circumferential direction R1 between the outer circumferential surface 21f of the outer ring 21b of the bearing 21 and the inner circumferential surface 61a of the cylinder part 61 of the metallic bracket 6 is arranged. With this configuration, an occurrence of a creep at the bearing 21 can be prevented. Accordingly, a trouble in the motor 100 such as the occurrence of vibration and noise due to the creep can be prevented and the quality of the motor 100 is improved.

With the motor 100 according to the first embodiment, in the outer ring 21b, the groove part 21d in which the ring-shaped elastic body 23 is arranged is formed at a position that is deviated towards one side in the axial direction with reference to the axial direction central position P of the ball 21c. This makes it possible to arrange the ring-shaped elastic body 23 in the outer ring 21b while the axial direction central part has a sufficient wall thickness in the outer ring 21b.

With the motor 100 according to the first embodiment, the ring-shaped elastic body 23 is arranged between the outer ring 21b and the cylinder part 61 and on the base part 64's side with reference to the axial direction central position P of the ball 21c. In the case where the metallic bracket 6 is formed by the drawing process, on the inner circumferential surface 61a of the cylinder part 61, higher dimensional accuracy is likely to be obtained as the position becomes closer to the base part 64. Thus, the compressive force acting on the ring-shaped elastic body 23 is stabilized when the ring-shaped elastic body 23 is arranged between the outer ring 21b and the cylinder part 61 and on the base part 64's side. Accordingly, the frictional force preventing the rotation of the outer ring 21b with respect to the cylinder part 61 is also stabilized, by which an occurrence of a creep at the bearing 21 can be prevented further.

With the motor 100 according to the first embodiment, the bearing holding part holding the load-side bearing 21 is the metallic bracket 6 formed of a galvanized steel sheet. By using the galvanized steel sheet, higher dimensional accuracy is likely to be obtained compared to resin, and thus the dimensional accuracy between the outer ring 21b of the bearing 21 and the metallic bracket 6 can be managed with high accuracy. Further, since the bearing holding part holding the the anti-load-side bearing 22 (i.e., the holding part 56b) is formed of BMC resin, the manufacturing cost of the motor 100 can be reduced.

With the motor 100 according to the first embodiment, there is provided the ring-shaped elastic body 23 for preventing a occurrence of a creep at the bearing 21 where a creep is likely to occur. With this configuration, the cost for the motor 100 can be reduced compared to a configuration for preventing a occurrence of a creep at both of the bearing 21 and the bearing 22.

Further, in the rotor 1 of the consequent-pole type, when exciting force in a radial direction acts on the bearing 21, 22 supporting the shaft 15, oil film formed between the ball 21c and an orbital ring (the inner ring 21a or the outer ring 21b) can be lost. In this case, the ball 21c and the orbital ring contact each other directly via no oil film, and thus the electrolytic corrosion is likely to occur when an axial current flows into the bearing 21, 22. According to the first embodiment, the insulation sleeve 60 is arranged between the end part 15b of the shaft 15 on the -z-axis side and the bearing 22. With this configuration, the flow of the axial current into the bearing 21, 22 supporting the shaft 15 is prevented, and thus an occurrence of electrolytic corrosion can be prevented.

With the motor 100 according to the first embodiment, the connection part 30 formed of resin material having the electrical insulation property connects the rotor core 10 and the shaft 15 to each other, and thus the axial current is prevented from flowing between the rotor core 10 and the shaft 15. Accordingly, the axial current is prevented from flowing between the rotor core 10 and the shaft 15 and then flowing into the bearing 21, 22, and thus occurrence of electrolytic corrosion can be prevented.

### (Second Embodiment)

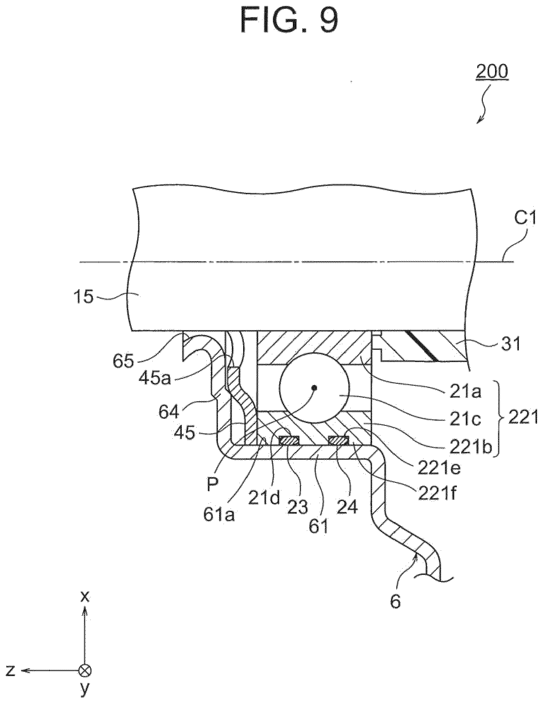

Fig. 9 is an enlarged sectional view showing a configuration of a load-side bearing 221 and surrounding components in a motor 200 according to a second embodiment. In Fig. 9, each component identical or corresponding to a component shown in Fig. 7 is assigned the same reference character as in Fig. 7. The motor 200 according to the second embodiment differs from the motor 100 according to the first embodiment in that a plurality of ring-shaped elastic bodies 23, 24 are arranged between an outer ring 221b of the load-side bearing 221 and the cylinder part 61 of the metallic bracket 6.

As shown in Fig. 9, the motor 200 includes the load-side bearing 221 that supports the load side of the shaft 15, the metallic bracket 6 that holds the load-side bearing 221, and the plurality of (two in Fig. 9) ring-shaped elastic bodies 23, 24 as the creep prevention parts.

The plurality of ring-shaped elastic bodies 23, 24 are arranged between an outer circumferential surface 221f of the outer ring 221b and the inner circumferential surface 61a of the cylinder part 61. Incidentally, the number of ring-shaped elastic bodies 23, 24 arranged between the outer ring 221b and the cylinder part 61 is not limited to two but can also be three or more.

The outer ring 221b includes a first groove part 21d and a second groove part 221e formed at different axial direction positions on the outer circumferential surface 221f. In the second embodiment, the first groove part 21d and the second groove part 221e are arranged at positions symmetrical with each other with reference to the axial direction central position P of the ball 21c, for example. The ring-shaped elastic body 23 is arranged in the first groove part 21d. The ring-shaped elastic body 24 is arranged in the second groove part 221e. The ring-shaped elastic body 24 is rubber containing thermosetting elastomer, for example, similarly to the ring-shaped elastic body 23. The ring-shaped elastic body 24 is an O-ring, for example, similarly to the ring-shaped elastic body 23.

A friction coefficient between the ring-shaped elastic body 24 and the cylinder part 61 is greater than a friction coefficient between the outer ring 21b and the cylinder part 61. Thus, when the plurality of ring-shaped elastic bodies 23, 24 arranged between the outer circumferential surface 21f of the outer ring 21b and the inner circumferential surface 61a of the cylinder part 61 are compressed in the radial directions, the ring-shaped elastic bodies 23, 24 increase the friction resistance in the circumferential direction R1 between the outer ring 21b and the cylinder part 61. Accordingly, the outer ring 21b becomes unlikely to rotate with respect to the cylinder part 61, and thus an occurrence of a creep at the bearing 21 can be prevented.

With the motor 200 according to the second embodiment described above, a plurality of ring-shaped elastic bodies 23, 24 are arranged between the outer circumferential surface 221f of the outer ring 221b and the inner circumferential surface 61a of the cylinder part 61. With this configuration, the friction resistance in the circumferential direction R1 between the outer circumferential surface 221f of the outer ring 221b and the inner circumferential surface 61a of the cylinder part 61 increases further. Accordingly, an occurrence of a creep at the load-side bearing 221 can be prevented further.

Further, with the motor 200 according to the second embodiment, the plurality of ring-shaped elastic bodies 23, 24 are arranged at positions symmetrical with reference to the axial direction central position P of the ball 21c. This makes it possible to arrange the plurality of ring-shaped elastic bodies 23, 24 in the outer ring 21b while the axial direction central part on which the load from the ball 21c acts has a sufficient wall thickness, in the outer ring 21b.

Except for the above-described features, the motor 200 according to the second embodiment is the same as the motor 100 according to the first embodiment.

### (Third Embodiment)

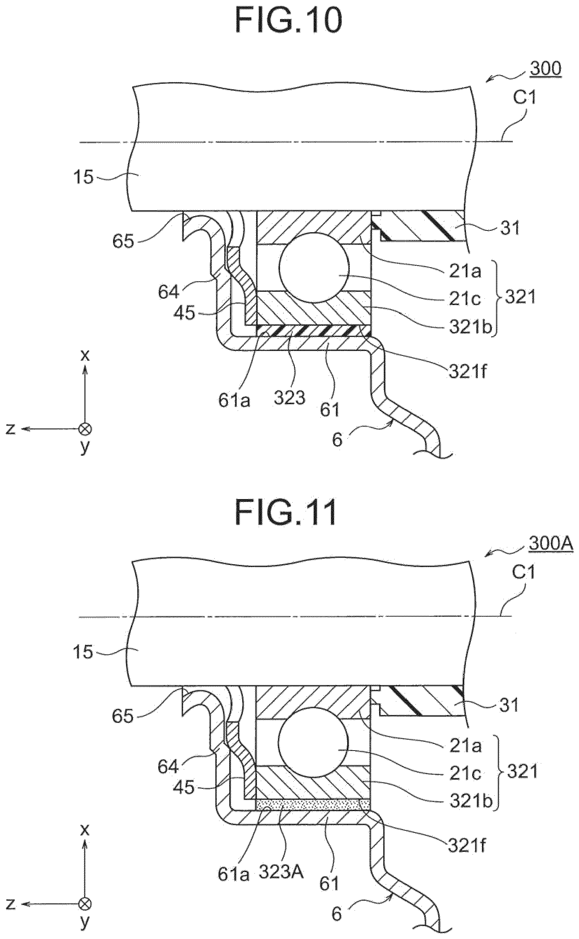

Fig. 10 is an enlarged sectional view showing a configuration of a load-side bearing 321 and surrounding components in a motor 300 according to a third embodiment. In Fig. 10, each component identical or corresponding to a component shown in Fig. 7 is assigned the same reference character as in Fig. 7. The motor 300 differs from the motor 100 or 200 according to the first or second embodiment in the configuration of the creep prevention part.

As shown in Fig. 10, the motor 300 includes the load-side bearing 321 that supports the load side of the shaft 15, the metallic bracket 6 that holds the load-side bearing 321, and a resin member 323 as the creep prevention part. The resin member 323 is arranged between an outer circumferential surface 321f of an outer ring 321b of the load-side bearing 321 and the inner circumferential surface 61a of the cylinder part 61 of the metallic bracket 6.

The resin member 323 is formed of thermoplastic elastomer, for example. The resin member 323 is previously fixed to the outer ring 321b by, for example, integrating the resin member 323 with the outer ring 321b by means of integral molding. The resin member 323 may also be previously fixed to the outer ring 321b by means of an adhesive agent or the like. Further, the resin member 323 may also be previously fixed to the metallic bracket 6.

A friction coefficient between the resin member 323 and the cylinder part 61 is greater than a friction coefficient between the outer ring 321b and the cylinder part 61. Namely, when the resin member 323 is arranged between the outer circumferential surface 321f of the outer ring 321b and the inner circumferential surface 61a of the cylinder part 61, the resin member 323 increases the friction resistance in the circumferential direction R1 between the outer ring 321b and the cylinder part 61. Accordingly, the outer ring 321b becomes unlikely to rotate with respect to the cylinder part 61, and thus an occurrence of a creep at the load-side bearing 321 can be prevented.

With the motor 300 according to the third embodiment described above, the resin member 323 increasing the friction resistance in the circumferential direction R1 between the outer ring 321b and the cylinder part 61 is arranged. With this configuration, the outer ring 321b becomes unlikely to rotate with respect to the cylinder part 61, and thus an occurrence of a creep at the load-side bearing 321 can be prevented.

Except for the above-described features, the third embodiment is the same as the first or second embodiment.

### (Modification of Third Embodiment)

Fig. 11 is an enlarged sectional view showing a configuration of a load-side bearing 321 and surrounding components in a motor 300A according to a modification of the third embodiment. In Fig. 11, each component identical or corresponding to a component shown in Fig. 7 or 10 is assigned the same reference character as in Fig. 7 or 10. The motor 300A differs from the motor according to any one of the first to third embodiments in the configuration of the creep prevention part.

As shown in Fig. 11, in the motor 300A, an adhesive agent 323A exists between the outer ring 321b of the load-side bearing 321 and the inner circumferential surface of the cylinder part 61 of the metallic bracket 6. In the motor 300A, the outer circumferential surface 321f of the outer ring 321b and the inner circumferential surface 61a of the cylinder part 61 are fixed to each other by the adhesive agent 323A. With this configuration, the outer ring 321b becomes unlikely to rotate with respect to the cylinder part 61.

With the motor 300A according to the modification of the third embodiment described above, the adhesive agent 323A exists between the outer circumferential surface 321f of the outer ring 321b and the inner circumferential surface 61a of the cylinder part 61, by which the outer circumferential surface 321f of the outer ring 321b and the inner circumferential surface 61a of the cylinder part 61 are fixed to each other. With this configuration, the outer ring 321b becomes unlikely to rotate with respect to the cylinder part 61, and thus an occurrence of a creep at the load-side bearing 321 can be prevented.

### (Fourth Embodiment)

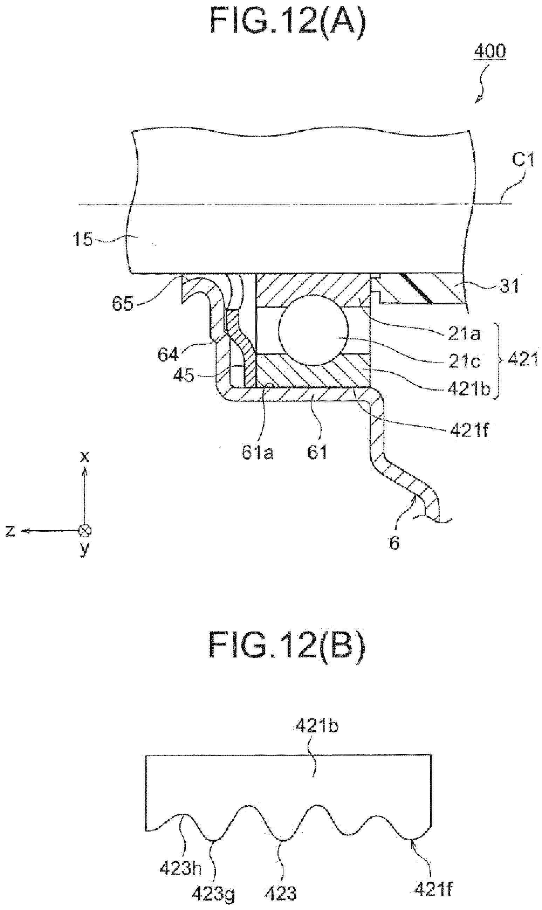

Fig. 12(A) is an enlarged sectional view showing a configuration of a load-side bearing 400 and surrounding components in a motor 400 according to a fourth embodiment. Fig. 12(B) is a partial front view of an outer circumferential surface 421f of an outer ring 421b shown in Fig. 12(A). In Fig. 12(A), each component identical or corresponding to a component shown in Fig. 7 is assigned the same reference character as in Fig. 7. The motor 400 differs from the motor according to any one of the first to third embodiments in the configuration of the creep prevention part.

As shown in Figs. 12(A) and 12(B), the motor 400 includes the load-side bearing 421 that supports the load side of the shaft 15, the metallic bracket 6 that holds the load-side bearing 421, and an undulating surface 423 as the creep prevention part. The undulating surface 423 is formed on the outer circumferential surface 421f of the outer ring 421b. The undulating surface 423 is formed on the whole of the outer circumferential surface 421f in regard to the axial direction, for example. It is permissible even if the undulating surface 423 is formed on at least part of the outer circumferential surface 421f.

As shown in Fig. 12(B), the undulating surface 423 includes convex parts 423g and concave parts 423h. The undulating surface 423 is formed by, for example, performing shot blasting processing on the outer circumferential surface 421f of the outer ring 421b. Surface roughness Ra of the undulating surface 423 on the outer circumferential surface 421f after the processing is greater than surface roughness Ra of the outer circumferential surface 421f before the processing. The surface roughness Ra of the outer circumferential surface 421f before the processing is 0.025 µm to 0.2 µm, for example. The surface roughness Ra of the outer circumferential surface 421f after the processing is 0.2 µm to 20 µm, for example. Here, the surface roughness Ra is the "arithmetic mean roughness" defined in JIS B0601: 2013.

A friction coefficient between the undulating surface 423 and the inner circumferential surface 61a of the cylinder part 61 is greater than a friction coefficient between the outer circumferential surface 421f before the processing (i.e., surface other than the undulating surface 423) and the inner circumferential surface 61a of the cylinder part 61. Accordingly, the friction resistance in the circumferential direction R1 between the outer ring 421b and the cylinder part 61 increases.

With the motor 400 according to the fourth embodiment described above, the undulating surface 423 increasing the friction resistance in the circumferential direction R1 between the outer ring 421b and the cylinder part 61 is formed on the outer circumferential surface 421f of the outer ring 421b. With this configuration, the outer ring 421b becomes unlikely to rotate with respect to the cylinder part 61, and thus an occurrence of a creep at the load-side bearing 421 can be prevented.

Except for the above-described features, the fourth embodiment is the same as any one of the first to third embodiments.

### (Fifth Embodiment)

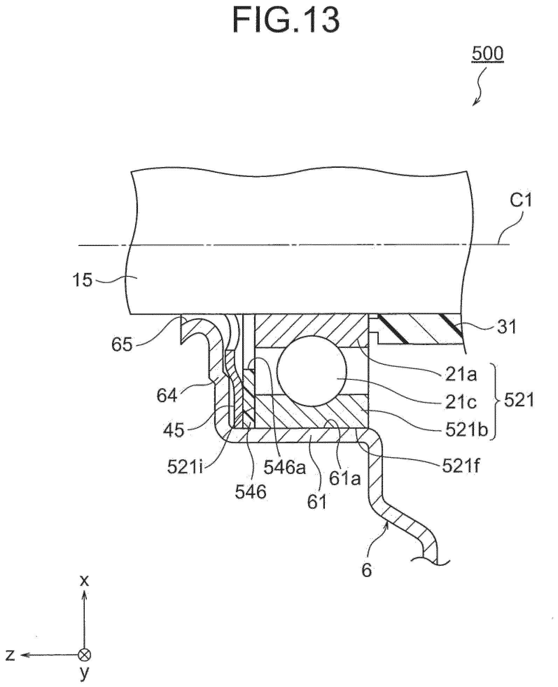

Fig. 13 is an enlarged sectional view showing a configuration of a load-side bearing 521 and surrounding components in a motor 500 according to a fifth embodiment. In Fig. 13, each component identical or corresponding to a component shown in Fig. 7 is assigned the same reference character as in Fig. 13. The motor 500 differs from the motor according to any one of the first to fourth embodiments in the configuration of the creep prevention part.

As shown in Fig. 13, the motor 500 includes the load-side bearing 521 that supports the load side of the shaft 15, the metallic bracket 6 that holds the load-side bearing 521, the precompression spring 45 arranged between the metallic bracket 6 and the load-side bearing 521, and a resin member 546 as the creep prevention part.

The resin member 546 is arranged between the load-side bearing 521 and the precompression spring 45. The resin member 546 is in contact with the precompression spring 45 and an end face 521i of an outer ring 521b. In other words, in the fifth embodiment, the precompression spring 45 applies force to the end face 521i of the outer ring 521b via the resin member 546 so as to press the end face 521i towards the mold stator 9 (see Fig. 1). The resin member 546 is formed of thermoplastic elastomer, for example. The resin member 546 is a member in a ring-like shape centering at the axis line C1, for example. The resin member 546 has a through hole 546a which the shaft 15 penetrates.

A friction coefficient between the resin member 546 and the outer ring 521b is greater than a friction coefficient between the outer ring 521b and the precompression spring 45. By arranging the resin member 546 between the outer ring 521b and the precompression spring 45, the friction resistance between the outer ring 521b and the precompression spring 45 is increased. With this configuration, the pressing force of the precompression spring 45 is stabilized, and thus the friction resistance in the circumferential direction R1 of the outer ring 521b between the outer ring 521b and the cylinder part 61 also increases. Accordingly, the outer ring 521b becomes unlikely to rotate with respect to the cylinder part 61, and an occurrence of a creep at the load-side bearing 521 can be prevented. Incidentally, in the fifth embodiment, the creep prevention part arranged between the load-side bearing 521 and the precompression spring 45 is not limited to the resin member 546 but can also be a different member such as an elastic body (e.g., rubber) or an adhesive agent.

With the motor 500 according to the fifth embodiment described above, the creep prevention part (e.g., the resin member 546) increasing the friction resistance between the outer ring 521b and the precompression spring 45 is arranged between the outer ring 521b and the precompression spring 45. With this configuration, the friction resistance in the circumferential direction R1 between the outer ring 521b and the cylinder part 61 also increases. Accordingly, the outer ring 521b becomes unlikely to rotate with respect to the cylinder part 61, and thus an occurrence of a creep at the load-side bearing 521 can be prevented.

Except for the above-described features, the fifth embodiment is the same as any one of the first to fourth embodiments.

### (Sixth Embodiment)

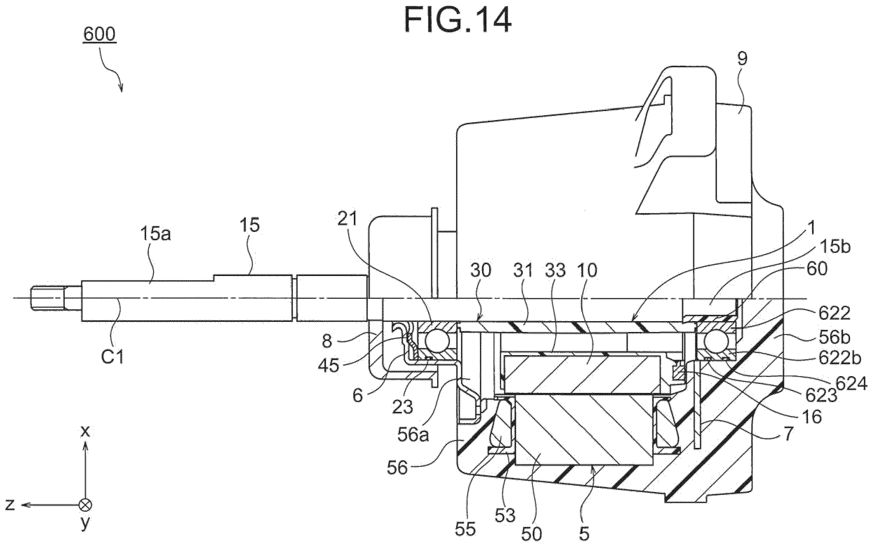

Fig. 14 is a configuration diagram showing a partial cross section and a side face of a motor 600 according to a sixth embodiment. In Fig. 14, each component identical or corresponding to a component shown in Fig. 1 is assigned the same reference character as in Fig. 1. The motor 600 differs from the motor 100 according to the first embodiment in further including a second creep prevention part that prevents a creep at an anti-load-side bearing 622.

As shown in Fig. 14, the motor 600 includes the ring-shaped elastic body 23 as a first creep prevention part and a plurality of (two in Fig. 14) ring-shaped elastic bodies 623, 624 as the second creep prevention part. The plurality of ring-shaped elastic bodies 623, 624 are arranged between an outer ring 622b of the bearing 622 and the holding part 56b of the mold resin part 56. Each of the plurality of ring-shaped elastic bodies 623, 624 is rubber containing thermosetting elastomer, for example. Further, each of the plurality of ring-shaped elastic bodies 623, 624 is an O-ring, for example, similarly to the ring-shaped elastic body 23. Incidentally, the number of ring-shaped elastic bodies 623, 624 arranged between the outer ring 622b and the holding part 56b is not limited to two; it is permissible if the number is one or more.

The ring-shaped elastic bodies 623, 624 arranged between the outer ring 622b and the holding part 56b are compressed in the radial directions and accordingly, frictional force preventing the rotation of the outer ring 622b with respect to the holding part 56b works. Namely, when the ring-shaped elastic bodies 623, 624 are arranged between the outer ring 622b and the holding part 56b, the friction resistance in the circumferential direction R1 between the outer ring 622b and the holding part 56b increases. Accordingly, an occurrence of a creep is prevented also at the anti-load-side bearing 622.

With the motor 600 according to the sixth embodiment described above, an occurrence of a creep can be prevented at each of the load-side bearing 21 and the anti-load-side bearing 622.

Except for the above-described features, the sixth embodiment is the same as any one of the first to fifth embodiments.

### (First Modification of Sixth Embodiment)

Next, a first modification of the sixth embodiment will be described below. Fig. 15 is a configuration diagram showing a partial cross section and a side face of a motor 600A according to the first modification of the sixth embodiment. In Fig. 15, each component identical or corresponding to a component shown in Fig. 14 is assigned the same reference character as in Fig. 14. The motor 600A differs from the motor 600 according to the sixth embodiment in the material of a holding part 82 holding the load-side bearing 622 and in the number of ring-shaped elastic bodies 624 arranged between the bearing 622 and the holding part 82.

As shown in Fig. 15, the motor 600A includes a cover member 80 fixed to an end part of the mold resin part 56 on the -z-axis side. The cover member 80 is formed of metal. The cover member 80 is formed of a molten zinc-aluminum-magnesium alloy-plated steel sheet, for example. By using the molten zinc-aluminum-magnesium alloy-plated steel sheet, high dimensional accuracy is easily obtained due to excellent workability since the press work is possible, and further, thermal conductivity is high compared to standard resin such as BMC and PBT.

The cover member 80 includes a flange part 81 fixed to the mold resin part 56 and the holding part 82 situated on the inner side in the radial directions relative to the flange part 81. The holding part 82 holds the bearing 622. Namely, in the first modification of the sixth embodiment, the holding part 82 as a second holding part for holding the anti-load-side bearing 622 is formed of metal.

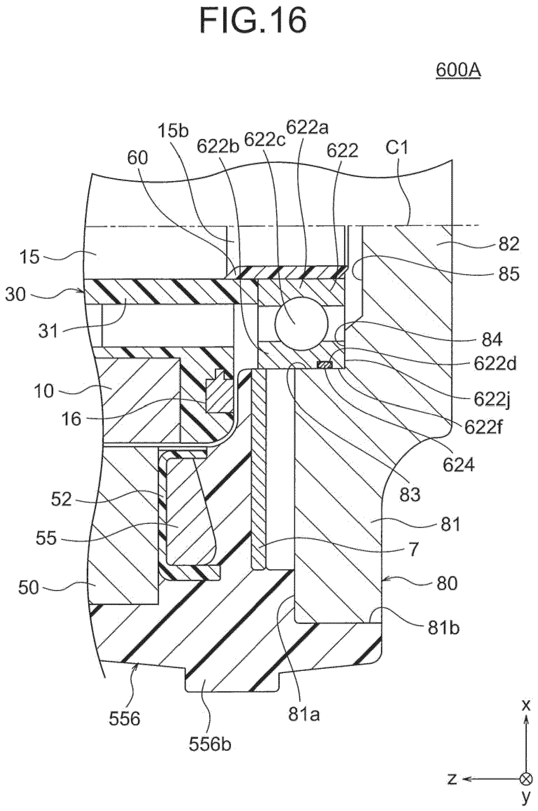

Fig. 16 is an enlarged sectional view showing a configuration of an anti-load-side bearing 622 and surrounding components in the motor 600A shown in Fig. 15. As shown in Fig. 16, the bearing 622 includes an inner ring 622a that supports the end part 15b of the shaft 15 on the -z-axis side via the insulation sleeve 60, the outer ring 622b fixed to the holding part 82 by means of clearance fitting, and balls 622c as rolling members arranged between the inner ring 622a and the outer ring 622b.

The flange part 81 includes a first surface 81a in contact with an axial direction end face of an end part 556b of the mold resin part 56 on the -z-axis side and a second surface 81b in contact with an inner surface of the end part 556b.

The holding part 82 has a cylindrical surface 83, a contact surface 84 and a separation surface 85. The cylindrical surface 83 faces a part of an outer circumferential surface 622f of the outer ring 622b in the radial directions. The contact surface 84 is in contact with an end face 622g of the outer ring 622b on the -z-axis side in regard to the axial direction. The separation surface 85 disjunctively adjoins the inner side of the contact surface 84 in the radial directions and is separate from the inner ring 622a of the bearing 622 and the shaft 15 towards the - z-axis side. Namely, the holding part 82 is not in contact with the inner ring 622a or the shaft 15 while being in contact with the outer ring 622b. With this configuration, the axial current flowing in the shaft 15 is inhibited from passing through the balls 622c via the holding part 82 and the inner ring 622a.

The ring-shaped elastic body 624 is arranged between the outer circumferential surface 622f of the outer ring 622b and the cylindrical surface 83 of the holding part 82. The ring-shaped elastic body 624 is arranged in a groove part 622d formed on the outer circumferential surface 622f of the outer ring 622b. The groove part 622d is formed on the outer circumferential surface 622f on the -z-axis side with reference to the axial direction position of the center of the ball 622c.

A friction coefficient between the ring-shaped elastic body 624 and the cylindrical surface 83 is greater than a friction coefficient between the outer circumferential surface 622f and the cylindrical surface 83. Namely, when the ring-shaped elastic body 624 is arranged between the outer circumferential surface 622f and the cylindrical surface 83, the friction resistance in the circumferential direction R1 between the outer ring 622b and the cylindrical surface 83 of the holding part 82 increases. Accordingly, the outer ring 622b becomes unlikely to rotate with respect to the holding part 82 and an occurrence of a creep at the bearing 622 can be prevented.

With the motor 600A according to the first modification of the sixth embodiment described above, in a case where both of the bearing holding part holding the load-side bearing 21 and the bearing holding part holding the anti-load-side bearing 622 are formed of metal, an occurrence of a creep at each of the load-side bearing 21 and the anti-load-side bearing 622 can be prevented.

### (Second Modification of Sixth Embodiment)

Next, a second modification of the sixth embodiment will be described below. Fig. 17 is a configuration diagram showing a partial cross section and a side face of a motor 600B according to the second modification of the sixth embodiment. In Fig. 17, each component identical or corresponding to a component shown in Fig. 15 is assigned the same reference character as in Fig. 15. The motor 600B differs from the motor 600A according to the first modification of the sixth embodiment in the material of a holding part 556c holding the load-side bearing 21 and the number of ring-shaped elastic bodies 23, 24 arranged between the bearing 21 and the holding part 556c.

As shown in Fig. 17, the mold stator 9 of the motor 600B includes a mold resin part 556 that covers the stator core 50. The mold resin part 556 includes the holding part 556c as a first holding part formed on the +z-axis side. The bearing 21 is held by the holding part 556c. Namely, in the second modification of the sixth embodiment, the bearing holding part holding the load-side bearing 21 is formed of resin. The precompression spring 45 that applies force to the end face of the outer ring 21b on the +z-axis side so as to press the end face towards the mold stator 9 is arranged between the bearing 21 and the holding part 556c.

A plurality of (two in Fig. 17) ring-shaped elastic bodies 23, 24 are arranged between the outer ring 21b of the bearing 21 and the holding part 556c. A friction coefficient between the ring-shaped elastic body 23, 24 and the holding part 556c is greater than a friction coefficient between the outer ring 21b and the holding part 556c. Namely, when the ring-shaped elastic bodies 23, 24 are arranged between the outer ring 21b and the holding part 556c, the friction resistance in the circumferential direction R1 between the outer ring 21b and the holding part 556c increases. Accordingly, the outer ring 21b becomes unlikely to rotate with respect to the holding part 556c, and thus an occurrence of a creep at the bearing 21 can be prevented. Incidentally, the number of ring-shaped elastic bodies 23, 24 arranged between the outer ring 21b and the holding part 556c is not limited to two; it is permissible if the number is one or more.

With the motor 600B according to the second modification of the sixth embodiment described above, in a case the bearing holding part holding the load-side bearing 21 is formed of resin and the bearing holding part holding the anti-load-side bearing 622 is formed of metal, an occurrence of a creep at each of the load-side bearing 21 and the anti-load-side bearing 622 can be prevented.

Further, in a case the holding part 556c holding the load-side bearing 21 is formed of resin, the holding part 556c is likely to wear down when the creep occurs to the bearing 21. With the motor 600B according to the second modification of the sixth embodiment, an occurrence of a creep at the bearing 21 is prevented, and thus wear on the holding part 556c can be prevented.

### (Third Modification of Sixth Embodiment)

Next, a third modification of the sixth embodiment will be described below. Fig. 18 is a configuration diagram showing a partial cross section and a side face of a motor 600C according to the third modification of the sixth embodiment. In Fig. 18, each component identical or corresponding to a component shown in Fig. 14 is assigned the same reference character as in Fig. 14. The motor 600C differs from the motor 600 according to the sixth embodiment in the material of the bearing holding part (resin bracket 90 which will be described later) holding the bearing 21 and the number of ring-shaped elastic bodies 23, 24 arranged between the bearing 21 and the holding part 556c.

As shown in Fig. 18, the motor 600C includes the resin bracket 90 as the first holding part that holds the bearing 21. The resin bracket 90 is fixed to the opening part 56a of the mold resin part 56. The resin bracket 90 is fixed to the opening part 56a by means of press fitting, for example. The resin bracket 90 is formed of BMC resin, for example. The resin bracket 90 includes a cylinder part 91 facing the outer ring 21b of the bearing 21 in the radial directions. The resin bracket 90 extends substantially in parallel with the axis line C1. The precompression spring 45 that applies force to the end face of the outer ring 21b on the +z-axis side so as to press the end face towards the mold stator 9 is arranged between the bearing 21 and the resin bracket 90. Incidentally, the shape of the resin bracket 90 is not limited to the shape shown in Fig. 18; the resin bracket 90 can also be in a different shape as long as the resin bracket 90 includes the cylinder part 91 facing the outer ring 21b in the radial directions.

A plurality of (two in Fig. 18) ring-shaped elastic bodies 23, 24 are arranged between the outer ring 21b of the bearing 21 and the cylinder part 91 of the resin bracket 90. With this configuration, an occurrence of a creep is prevented at the bearing 21. Incidentally, the number of ring-shaped elastic bodies 23, 24 arranged between the outer ring 21b and the cylinder part 91 is not limited to 2; it is permissible if the number is 1 or more.

According to the third modification of the sixth embodiment described above, with the motor 600C according to the first modification of the sixth embodiment described above, in a case both of the bearing holding part holding the load-side bearing 21 and the bearing holding part holding the anti-load-side bearing 622 are formed of resin, an occurrence of a creep at each of the load-side bearing 21 and the anti-load-side bearing 622 can be prevented.

### (Air Conditioner)

Next, a description will be given of an air conditioner 700 employing the motor according to any one of the above-described first to sixth embodiments. The following description will be given by taking an air conditioner 700 employing the motor 100 according to the first embodiment as an example.

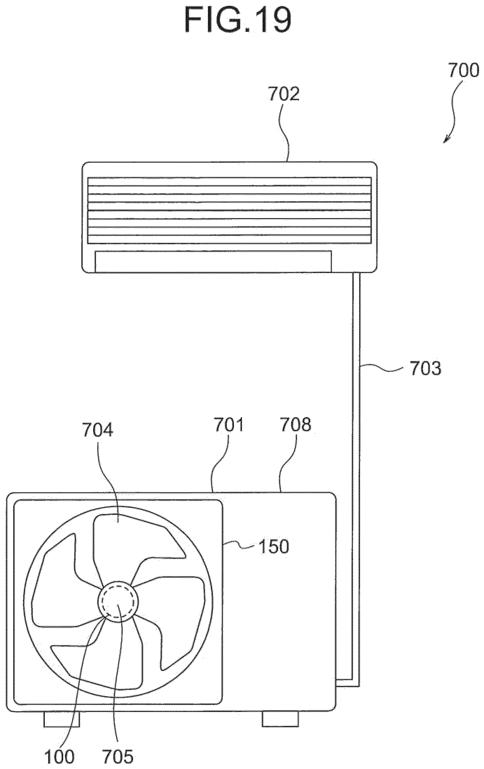

Fig. 19 is a diagram showing the configuration of the air conditioner 700. As shown in Fig. 19, the air conditioner 700 includes an outdoor unit 701, an indoor unit 702, and refrigerant piping 703 connecting the outdoor unit 701 and the indoor unit 702 together. The air conditioner 700 is capable of executing an operation such as a cooling operation of blowing out cool air or a heating operation of blowing out warm air, from the indoor unit 702, for example.

The outdoor unit 701 includes an outdoor blower 150 as a blower, a frame 707 that supports the outdoor blower 150, and a housing 708 that covers the outdoor blower 150 and the frame 707.

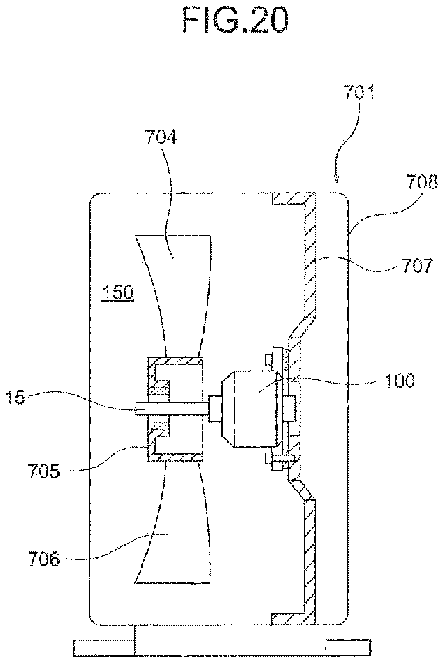

Fig. 20 is a cross-sectional view showing a configuration of the outdoor unit 701 shown in Fig. 19. As shown in Fig. 20, the outdoor blower 150 of the outdoor unit 701 includes the motor 100 attached to the frame 707 and a blade wheel 704 attached to the shaft 15 of the motor 100. The blade wheel 704 includes a boss part 705 fixed to the shaft 15 and blades 706 provided on an outer periphery of the boss part 705. The blade wheel 704 is a propeller fan, for example.

When the motor 100 drives the blade wheel 704, the blade wheel 704 rotates and an airflow is generated. By this operation, the outdoor blower 150 is capable of blowing out air. For example, in the cooling operation of the air conditioner 700, heat emitted when the refrigerant compressed by a compressor (not shown) is condensed in a condenser (not shown) is discharged to the outside of the room by the air blowing operation of the outdoor blower 150.

In the motor according to any one of the above-described first to sixth embodiments, a vibration and a noise due to a creep are prevented, and thus quietness of the outdoor blower 150 is increased. Accordingly, quietness of the outdoor unit 701 including the outdoor blower 150 is also increased. Further, since an occurrence of a creep at the bearing 21 is prevented at a low cost in the motor 100 according to the first embodiment, cost reduction of the air conditioner 700 including the motor 100 can be achieved.

Incidentally, the motor in any one of the first to sixth embodiments may be provided also in a blower (e.g., indoor blower of the indoor unit 702) other than the outdoor blower 150 of the outdoor unit 701. Further, the motor in any one of the first to sixth embodiments may be provided also in a household electrical appliance other than an air conditioner.

### DESCRIPTION OF REFERENCE CHARACTERS

1: rotor, 6: metallic bracket (bearing holding part, first holding part), 9: mold stator (stator), 15: shaft (rotary shaft), 15b: part on anti-load side, 15c: part on load side, 21: bearing (first bearing), 21b: outer ring, 21b: outer circumferential surface, 21i: end face, 22: bearing (second bearing), 23, 24, 623, 624: ring-shaped elastic body (elastic member), 45: precompression spring, 56b: holding part (bearing holding part, second holding part), 61a: inner circumferential surface (inner surface), 82: holding part (bearing holding part, second holding part), 90: resin bracket (bearing holding part, first holding part), 100, 200, 300, 300A, 400, 500, 600, 600A, 600B, 600C: motor, 150: outdoor blower (blower), 323: resin member, 323A: adhesive agent, 423: undulating surface, 546: resin member, 556c: holding part (bearing holding part, first holding part), 700: air conditioner, P: central position.

## Claims

1. A motor comprising:
a stator;
a rotor of a consequent-pole type including a rotary shaft;
a bearing as a rolling bearing that supports the rotary shaft;
a bearing holding part that is fixed to the stator and holds an outer ring of the bearing; and
a creep prevention part that is arranged between the outer ring and the bearing holding part and increases friction resistance in a circumferential direction of the outer ring between the outer ring and the bearing holding part.

2. The motor according to claim 1, wherein the creep prevention part includes an elastic member arranged between an outer circumferential surface of the outer ring and an inner circumferential surface of the bearing holding part.

3. The motor according to claim 2, wherein
the outer ring includes a groove part formed on the outer circumferential surface, and
the elastic member is arranged in the groove part.

4. The motor according to claim 2 or 3, wherein the elastic member is an O-ring.

5. The motor according to any one of claims 1 to 4, wherein the creep prevention part includes a resin member arranged between an outer circumferential surface of the outer ring and an inner circumferential surface of the bearing holding part.

6. The motor according to any one of claims 1 to 5, wherein the creep prevention part includes an adhesive agent arranged between an outer circumferential surface of the outer ring and an inner circumferential surface of the bearing holding part.

7. The motor according to any one of claims 1 to 6, wherein the creep prevention part is arranged between an outer circumferential surface of the outer ring and an inner circumferential surface of the bearing holding part and at a position that is deviated towards one side in an axial direction of the rotary shaft with reference to a center of a rolling member of the bearing.

8. The motor according to any one of claims 1 to 7, wherein
the bearing holding part includes a cylinder part that faces the outer ring in radial directions of the rotary shaft and a base part that extends inward in the radial directions from the cylinder part, and
the creep prevention part is arranged between an outer circumferential surface of the outer ring and an inner circumferential surface of the cylinder part and on the base part's side with reference to an axial direction central position of a rolling member of the bearing.

9. The motor according to any one of claims 1 to 8, wherein the creep prevention part is formed on an outer circumferential surface of the outer ring and has an undulating surface in contact with an inner circumferential surface of the bearing holding part.

10. The motor according to claim 9, wherein a first friction coefficient between the undulating surface and the inner circumferential surface of the bearing holding part is greater than a second friction coefficient between a surface of the outer ring other than the undulating surface and the inner circumferential surface of the bearing holding part

11. The motor according to any one of claims 1 to 10, further comprising a precompression spring that is arranged between the bearing and the bearing holding part and applies force to an end face of the outer ring in regard to an axial direction of the rotary shaft so as to press the end face towards the stator,
wherein the creep prevention part includes a member arranged between the end face of the outer ring and the precompression spring.

12. The motor according to any one of claims 1 to 11, wherein the bearing supports a load-side part or an anti-load-side part of the rotary shaft.

13. The motor according to any one of claims 1 to 12, wherein the bearing holding part is formed of at least one of metal and resin.

14. The motor according to any one of claims 1 to 13, wherein
the bearing includes a first bearing and a second bearing respectively arranged on sides opposite to each other across the stator,
the bearing holding part includes a first holding part that holds a first outer ring of the first bearing and a second holding part that holds a second outer ring of the second bearing, and
the creep prevention part includes a first creep prevention part that increases the friction resistance in the circumferential direction of the first outer ring between the first outer ring and the first holding part and a second creep prevention part that increases the friction resistance in the circumferential direction of the second outer ring between the second outer ring and the second holding part.

15. The motor according to claim 14, wherein
the first holding part is formed of metal, and
the second holding part is formed of resin.

16. The motor according to claim 14 or 15, wherein
the first holding part is formed of a galvanized steel sheet, and
the second holding part is formed of BMC resin.

17. The motor according to claim 14, wherein both of the first holding part and the second holding part are formed of metal.

18. The motor according to claim 14, wherein both of the first holding part and the second holding part are formed of resin.

19. A blower comprising:
the motor according to any one of claims 1 to 18; and
a blade wheel that is rotated by the motor.

20. An air conditioner comprising:
an outdoor unit; and
an indoor unit connected to the outdoor unit by refrigerant piping,
wherein at least one of the outdoor unit and the indoor unit includes the blower according to claim 19.
